# EUROPÄISCHE PATENTSCHRIFT

(11) **EP 1 764 518 B1**
(45) Veröffentlichungstag und Bekanntmachung des Hinweises auf die Patenterteilung: **03.03.2010**
(21) Anmeldenummer: 06017667.4
(22) Anmeldetag: 24.08.2006
(51) Int. Cl.: F16B 23/00, F16B 25/00, F16B 12/00, B25B 13/48

(54) **Verbindungselement und zugehöriges Werkzeugteil**
Connection element and matching tool element
Élément de connection et pièce d'outil correspondant

(30) Priorität: 24.08.2005 DE 102005040059
(43) Veröffentlichungstag der Anmeldung: 21.03.2007
(73) Patentinhaber: Murr, Hans, 86633 Neuburg/Donau (DE)
(72) Erfinder: Murr, Benjamin, 86633 Neuburg/Donau (DE)
(74) Vertreter: nospat Patent- und Rechtsanwälte Naefe Oberdorfer Schmidt

(56) Entgegenhaltungen:
- EP-A2- 1 085 220
- WO-A-82/00505
- DE-A1- 2 062 405
- DE-A1- 4 031 363
- DE-C- 605 943
- FR-A- 2 788 569
- FR-A1- 2 372 005
- GB-A- 315 182
- GB-A- 491 680
- GB-A- 596 598
- US-A- 4 097 061
- US-A- 5 030 052
- US-B1- 6 361 258
- US-B1- 6 406 239

## Beschreibung

Die vorliegende Erfindung betrifft ein Verbindungselement zum Verbinden von Hölzern oder Holzbauteilen und ein zugehöriges Werkzeugteil als Adapter an bekannte elektrisch oder pneumatisch betriebenen Handmaschinen. Als nächstliegender Stand der Technik werden die Dokumente FR 2 788 569 A und DE 1 994 217 A1 angesehen.

Das Verbinden von Holz beispielsweise in Form von Brettern und Balken durch Verschraubungen oder Holzdübel und Bolzen bzw. Zapfen ist allgemein bekannt und findet zum Beispiel im Brettstapelbau, Fachwerkbau, Dachbau, Massivholzwandbau und Möbelbau Anwendung. Verschraubungen weisen dabei immer den Nachteil auf, dass ein Verbindungselement aus Stahl oder sonstigem Metall bestehen, wie z.B. in der DD 236 563 A1 offenbart. Auch bei einer Verwendung besonderer Kunststoffe ist damit stets eine Einstofflichkeit einer Konstruktion im Bereich derartiger Verbindungen nicht gegeben. Gerade im Bereich des biologischen bzw. ökologischen Hausbaus wird jedoch bei hohen Anforderungen an die Langlebigkeit vermehrt Wert auf die weitgehende Nutzung nachwachsender und einheimischer Ressourcen gelegt. Mindestens in diesem Bereich müssen andere Lösungen eingesetzt werden.

Es sind mehrere Möglichkeiten bekannt, Hölzer der vorstehend genannten Art durch Holzdübel zu verbinden. Zapfen sind als Mittel zur zimmermannsmäßigen Verbindung hölzerner Bauteile im Fachwerk- und Dachbau ebenfalls alt bekannt. Sie finden Einsatz zum Anschluss von Pfosten an Fachwerkriegel oder auch zum Anschluss von Wechseln in Holzbalkendecken und zur Verbindung von Sparren an einem Firstgelenk oder zur Anbindung ähnlicher Eckverbindungen. Eine dem Zapfen prinzipiell verwandte Möglichkeit besteht darin, Dübel, die einen größeren Durchmesser als eine zugehörige Bohrung haben, in diese Bohrung einzupressen. Dübel stellen dabei ein vorwiegend auf Abscheren beanspruchtes Holzverbindungsmittel dar. Zum Einpressen als kurzer Holzstab ausgeführt weist der Dübel beim Verbinden von Holzbauteilen Vorteile beispielsweise gegenüber Nut-, Feder- und Schwalbenschwanzfügungen sowie Zapfenverbindungen auf. Dies sind insbesondere Holzersparnis an den zu verbindenden Teilen, Automatisierbarkeit, Nutzung von Abfallholzlängen, billige und genaue Bearbeitung der aneinanderzufügenden Werkstücksteilen, da nur einfache Löcher gebohrt zu werden brauchen. Hierzu sind Dübelmaschinen und Dübellochbohrmaschinen z.B. im Möbelbau für Kasten- und Kleinmöbel aus dem Stand der Technik gekannt. Mit aufgerauter oder durch Einpressen profilierter Oberfläche versehen erhält ein Dübel auch die Eigenschaft, Leim festzuhalten, ohne in dem Dübelloch zu klemmen.

Da zum Einpressen jedoch große Kräfte nötig sind, ist das Dübeln nur durch erheblichen maschinellen und damit auch finanziellen Aufwand zu bewerkstelligen. Ein weiterer Nachteil dieser Methode ist, dass aufgrund der nötigen Anlagen kein mobiler Einsatz möglich ist, d.h. ein Baustelleneinsatz bzw. ein Einsatz vor Ort mit leichtem Werkzeug oder transportablem Gerät. Ein dritter Nachteil ist, dass das Einpressen mit normalen Anlagen nur rechtwinklig zur Werkstückoberfläche möglich ist und dass der Dübel nicht im Holz völlig versenkbar ist. Nur bei Verbindungen zwischen zwei Bauteilen kann der Dübel also prinzipiell von außen unsichtbar bleiben oder wenigstens plan bzw. eben mit einer Oberfläche abschließend eingesetzt werden.

Die vorstehend genannte Möglichkeit einer Verbindung von Hölzern findet vor allem im Brettstapelbau, sowie im Massivholzwandbau Anwendung, wie zum Beispiel aus Patent AT 410687 B bekannt. In der AT 410687 B wird zudem eine Spreizung des Dübels durch abschließende Feuchtigkeitsaufnahme des vor dem Einsatz getrockneten Dübels vorgeschlagen, um eine dauerhafte Lagesicherung bzw. Bindung zwischen Dübel und Hölzern durch Kraftschluss in Folge einer Volumenausdehnung des Dübels zu erreichen. Zusätzlich wird eine Aufweitung der Dübel durch stirnseitiges Eintreiben von Keilen vorgeschlagen, damit wird erreicht, dass ein Bauteil bzw. Schichtholzelement mit Verlassen einer Presse bereits eine endgültige mechanische Festigkeit aufweist.

Eine weitere Möglichkeit besteht darin, die Holzdübel in Bohrungen mit dem selben Durchmesser einzuleimen. Hierzu sind bekannte Hartholzdübel bereits besonders vorbereitet. Ein Nachteil ist dabei, dass die Verbindung nicht mehr einstofflich stattfindet, d.h. dass das Naturprodukt Holz mit Kunstoffen und/oder anderen Substanzen und Hilfsstoffen versetzt wird. So können z.B. aus einem Kunstharzleim Schadstoffe entweichen. Außerdem entstehen weitere Kosten für den Leim. Diese Verbindungsart findet dennoch vor allem im Möbelbau Anwendung.

Aufgabe der vorliegenden Erfindung ist daher die Schaffung eines Verbindungselements zur Herstellung einer mit mobilem Gerät auch vor Ort einsetzbaren, kostengünstigen Verbindung, die ohne Leim- bzw. sonstigen Hilfsmitteleinsatz und aufwendigen Maschineneinsatz auskommt und dennoch über eine ausreichend hohe Festigkeit verfügt.

Die Lösung dieser Aufgabe erfolgt gemäß den Merkmalen der Ansprüche 1 welcher ein Verbindungselement darstellt, und 11, welcher ein Werkzeugteil für ein Verbindungselement aus Holz darstellt. Vorteilhafte Weiterbildungen sind Gegenstand der Unteransprüche.

Nach einem Grundgedanken der Erfindung wird das Eindringen des Verbindungselements nicht nach Art des bekannten Holzdübels über Druck durch Einpressen, sondern mittels eines Drehmoments erreicht. Das heißt, dass ein erfindungsgemäßes Verbindungselement einen konischen oder zylindrischen Körper aus einem Holz oder Holzwerkstoff aufweist. Ein derartiges Element ist als Verbinder zum Einschrauben in eine Ausnehmung einer Holzkonstruktion ausgebildet, die selber frei von einem vorgefertigten Innengewinde ist. Damit schafft sich ein erfindungsgemäßes Verbindungselement ein korrespondierendes Innengewinde selber.

Das Gewinde eines derartigen Verbindungselementes weist dabei eine Gewindetiefe bzw. Abweichung zwischen Kern- und Außendurchmesser des Körpers des Verbindungselementes von unter ca. 0.2 mm bis etwa 10 % eines Durchmessers seines Körpers auf. Vorzugsweise entspricht dabei die Ganghöhe einem Steigungswinkel ϕ von ca. 1° bis etwa 15°.

Bei der Ausführung eines erfindungsgemäßen Verbindungselements ist den speziellen Eigenschaften des Naturwerkstoffs Holz besonders Rechnung zu tragen: Holz ist ein Faserwerkstoff, der ganz andere Eigenschaften aufweist, als beispielsweise Stahl oder Kunststoffe. Dementsprechend ist ein durch einen Stab aus Holz übertragbares Drehmoment i.d.R. geringer, als bei einem Stab aus einem anderen, homogenen Werkstoff. Auch die Krafteinleitungsstellen sind bei einem Verbindungselement aus Holz diesen Eigenschaften besonders anzupassen, um ein Ausreißen oder Ausfransen des Stabes zu verhindern. Das gilt in besonderem Maße auch für das an dem Mantel des Verbindungselements vorgesehene Gewinde: scharfe schneidende Kanten spitzwinkliger Gewindeprofile sind in Holz regelmäßig nicht zuverlässig herstellbar, und sehr schmale Gewindeflanken, wie sie bei Metallschrauben üblich sind, können in Holz nicht ausgeführt werden. Dementsprechend ist in einem erfindungsgemäßen Verbindungselement in einer Ausführungsform ein nahezu trapezförmiges Gewinde geringer Tiefe und geringer Steigung vorgesehen, das in den Mantel spanabhebend eingeschnitten, gefräst, gedreht bzw. gedrechselt oder spanlos eingepresst, geprägt oder gerollt wird. Bevorzugt wird dabei, dass abgerundete Kehlen zwischen den Windungen quasi als sanfte Täler geschaffen werden. Hierdurch kann eine mechanische Belastbarkeit eines Bauteils erhöht werden.

Die Steigung der Wendel ist so gewählt, dass die Einpresswendel bzw. das Gewindeprofil insgesamt breit genug sind, um beim Einschrauben des Verbindungselementes in die Bohrung eines Holzbauteils nicht auszubrechen. Das Einpressgewinde wirkt in der Bohrung dann wie eine Reihe von Widerhaken und verbessert und sichert so den Sitz des Verbindungselementes.

In einer bevorzugten Ausführungsform der Erfindung ist ein innenbetätigtes kopfloses Verbindungselement dazu ausgebildet, dass es mittels eines als Bohrmaschineneinsatz ausgebildetes Werkzeugteils in ein vorgebohrtes Loch ohne Innengewinde nach dem Prinzip einer Holzschraube eingedreht wird. Dabei weist ein erfindungsgemäßes Verbindungselement jedoch eine vergleichsweise geringere Steigung der Schraubenlinie und bereitere Gewindeflanken ohne scharfe Flanken auf. Während die in bekannten Holzdübeln eingepressten mehrgängigen Drall- oder Kreuzrillen neben einer Aufnahme von Leim durch ihre sehr hohe Steigung nur eine leichte Drehung des Dübels im Zuge des Einpressens oder Einschlagens mit dem Ziel einer Verteilung von Leim an der Wand der Bohrung verursachen, ist erfindungsgemäß also ein Einschrauben mit Schaffung eines entsprechendes Gewindes in der Wand der Bohrung vorgesehen. Damit wird auch ohne Verwendung zusätzlicher Hilfsmittel, wie z.B. Leim oder Holzquellmitteln, eine form- und kraftschlüssige Verbindung geschaffen. Regelmäßig ist ein Lösen einer derartigen Verbindung nicht vorgesehen, wenngleich es unter Einsatz eines entsprechenden Werkzeugs möglich ist, beispielsweise durch ein angepasstes Werkzeugelement mit Linksgewinde. Das Verbindungselement könnte auch bei gleicher Drehrichtung durch den Aufbau hindurch auf der gegenüberliegenden Seite wieder herausgeschraubt werden, was nur eine Anpassung eines entsprechenden Werkzeugs notwendig machen würde.

Es ist in einer Ausführungsform der Erfindung ein eingängiges spiralförmiges Einpressgewinde für einen Vortrieb durch Drehung vorgesehen, das durch eine schraubenförmige Einkerbung am Mantel eines Holzstabes gebildet ist, der innenbetätigt ist. Bevorzugt wird also eine Ausführung als innenbetätigtes, kopfloses Verbindungselement 1 zum direkten Einschrauben in Ausnehmungen einer Holzkonstruktion. Daran angepasst wird nachfolgend unter Bezugnahme auf die Zeichnung auch entsprechendes ein Werkzeugteil beschrieben.

Die mit der Erfindung erzielten Vorteile bestehen insbesondere darin, dass ein erfindungsgemäßes Verbindungselement als Verbindungsmittel sehr einfach, mobil und ohne aufwändigen Maschineneinsatz zu verarbeiten ist und dass durch das Einschrauben eine höhere Auszugsfestigkeit als beim Einpressen erreicht wird. Damit können auch Verbindungen, die bisher nur durch Metall erstellt werden konnten, nun einstofflich in Holz bewerkstelligt werden.

Nachfolgend werden ein Ausführungsbeispiel der Erfindung unter Darstellung weiterer Merkmale und die sich daraus ergebenden Vorteile unter Bezugnahme auf die Abbildungen der Zeichnung näher erläutert. In der Zeichnung zeigen:
- Figur 1:: eine Darstellung eines Verbindungselementes im teilweisen Längsschnitt;
- Figur 2:: eine Draufsicht auf einen werkzeugseitigen Endbereich des Verbindungselementes von Figur 1;
- Figur 3:: eine vergrößerte Darstellung einer Einzelheit von Fi-gur 1;
- Figur 4:: eine seitliche Ansicht eines Werkzeugteils zum Einschrauben des Verbindungselementes von Figur 1;
- Figur 5:: einen Schnitt durch eine Einbauposition zum Verbinden von zwei Fichtenbrettern durch zwei gleichartige Verbindungselemente und
- Figur 6:: einen Schnitt analog der Darstellung von Figur 5 durch einen Ausschnitt einer dreischichtigen Holzkonstruktion.

Über die Abbildungen hinweg werden einheitlich gleiche Bezeichnungen und Bezugszeichen für gleiche Bauteile, Elemente oder Baugruppen verwendet.

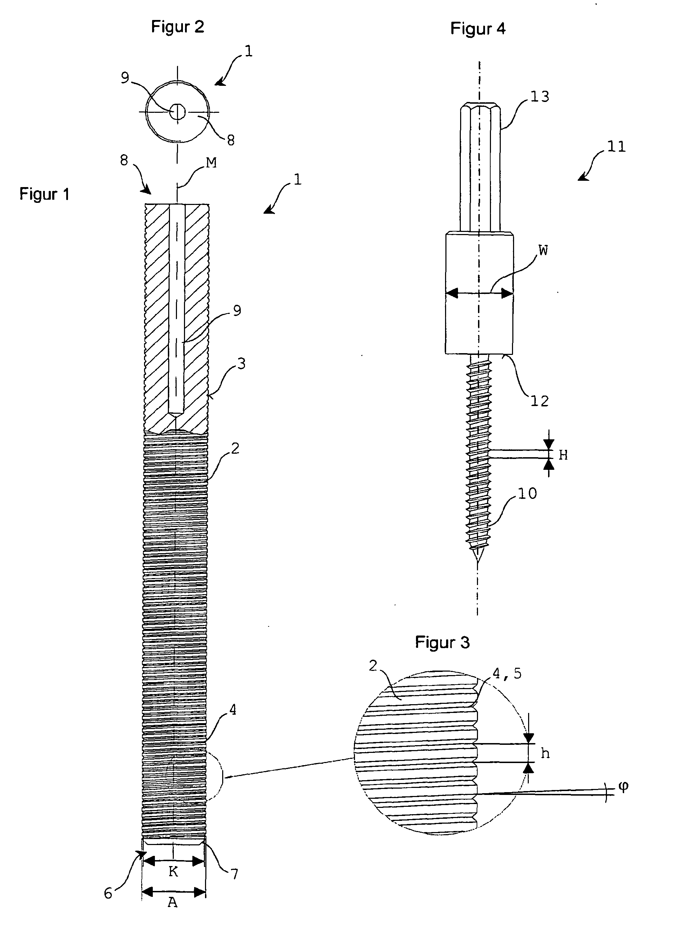

Figur 1 zeigt eine Darstellung eines Verbindungselementes 1 mit einem zylindrischen Körper 2 aus getrocknetem Buchenholz mit geringer Restfeuchte im teilweisen Längsschnitt. Der zylindrische Körper 2 weist an seinem Mantel 3 eine Schraubenlinie 4 mit geringem Steigungswinkel ϕ bzw. geringer Ganghöhe h auf. Mit einer im Wesentlichen trapezförmigen Profilierung ist entlang der Schraubenlinie 4 ein eingängiges Gewinde 5 geringer Gewindetiefe t ausgebildet. Das Gewinde 5 wird aufgrund der geringen zu verdrängenden Massen an Holz am Mantel 3 des Buchen-Körpers 2 spanlos durch Rollen oder Prägen erzeugt. Ein Außendurchmesser A ist größer oder gleich dem Innendruchmesser D der Bohrung in dem Bauteil aus Holz ausgebildet.

An einem Endbereich 6 ist eine Fase 7 vorgesehen, um ein Einsetzen des Verbindungselementes 1 in ein Loch einer Holzkonstruktion zu erleichtern. Die Befestigung des Verbindungselementes 1 erfolgt durch ein durch das Gewinde 5 erzwungenes Einschrauben im Zuge einer von außen aufgebrachten Drehbewegung. Hierzu ist an einer oberen Stirnseite 8 eine Bohrung 9 in Form einer in einer Mittelachse M des Verbindungselementes 1 verlaufenden Sackbohrung zur Aufnahme eines Gewindebolzens 10 eines Werkzeugteils 11 vorgesehen. Das Verbindungselement 1 ist so als innenbetätigtes kopfloses Verbindungselement zum Ein- oder Durchschrauben an einer reinen Holzkonstruktion ausgebildet, wie nachfolgend noch an einer weiteren Abbildung exemplarisch dargestellt wird.

Figur 2 stellt eine Draufsicht auf einen werkzeugseitigen Endbereich des Verbindungselementes von Figur 1 dar. Die ebene Fläche der Stirnseite 8 bietet einem Werkzeug nur in der Bohrung 9 eine Angriffsmöglichkeit.

Figur 3 zeigt in vergrößerter Darstellung eine Einzelheit von Figur 1. Hierdurch wird der ungefähr trapezförmige Querschnitt des Gewindeprofils verdeutlicht, die geringe Gewindetiefe t als Differenz zwischen Außendurchmesser A und einem Kerndurchmesser K des Verbindungselementes 1 und die geringe Ganghöhe h, die sich auch in einem sehr geringen Steigungswinkel ϕ von nur wenigen Grad widerspiegelt. Das spiralförmig um den Mantel 3 des Verbindungselements 1 umlaufende Gewinde 5 ist so gewählt, dass die in der von Gang zu Gang des Gewindes 5 verbleibende trapezartige oberflächliche Holzbereich noch breit genug ist, um beim Eindrehen nicht auszubrechen.

Figur 4 ist eine seitliche Ansicht des Werkzeugteils 11 aus Metall, das zum Einschrauben des Verbindungselementes 1 von Figur 1 verwendet wird. Das Werkzeugteil 11 stellt eine Anpassung des in Figur 2 der DE 199 44 217 A1 für andere Zwecke offenbarten Werkzeugs dar: Hier ist an einem freien Ende des Werkzeugteils 11 ein Gewindebolzen 10 in Form einer eingespannten Holzschraube vorgesehen. Dieser Gewindebolzen 10 aus Metall weist mit einer klar höheren Gewindesteigung H und einem scharfkantigen Gewindeprofil deutliche Unterschiede zu dem in Figur 1 dargestellten und in Figur 3 vergrößerten Gewinde 5 des hölzernen Verbindungselementes 1 auf.

Der Gewindebolzen 10 wird bis zum Erreichen eines Anschlagflansches 12 des Werkzeugteils 11 in die Bohrung 9 an der Stirnseite 8 des Verbindungselementes 1 eingeschraubt. Die Sackbohrung 9 im Holz muss dazu kein eigenes Innengewinde tragen, es wird beim Eindrehen des Gewindebolzens 10 automatisch erzeugt. Wenn der Gewindebolzen 10 soweit in die Bohrung 9 eingedreht ist, dass der Anschlagflansch 12 an der Stirnseite 8 ansteht, ist ein weiteres Eindringen des Holzgewindes in die Bohrung 9 des Verbindungselements 1 nicht mehr möglich. Mit Erreichen dieser Position, also Kontakt zwischen dem Anschlagflansch 12 des Werkzeugteils 11 und der Stirnseite 8 des Verbindungselementes 1, wird das volle, von einem nicht weiter dargestellten elektrischen Schrauber aufgebrachte Drehmoment auf das Verbindungselement 1 übertragen. Als Schrauber kommen dabei unter Hinblick auf die Leistungsklassen alle Geräte in Betracht, die bis zu 420 mm lange Holzschrauben ohne Vorbohren in massives Holz eindrehen können.

Das Drehmoment wird über einen in einem Schraub- bzw. Bohrfutter drehfest fixierten Sechskantstahl 13 als Adapter auf das Werkzeugteil 11 übertragen. So vorbereitet wird das Verbindungselement 1 nun an der Bohrung der Holzkonstruktion angesetzt, der nun durch Drehung eingesetzt wird. Vorteilhafterweise kann das Verbindungselement 1 schon vor dem Ansetzen auf eine Bohrung nicht von dem Werkzeug herabfallen, da es förmlich auf- bzw. angeschraubt ist. Andere, hier nicht weiter dargestellte Lösungen zur Momentenübertragung wählen bekannte Schraubenkopf-Formen mit Schlitz oder Kreuzschlitz, Zweipunkt- oder Vieleck-Ausnehmungen. Sie erreichen jedoch nicht die vorstehend angedeutete Montagesicherheit.

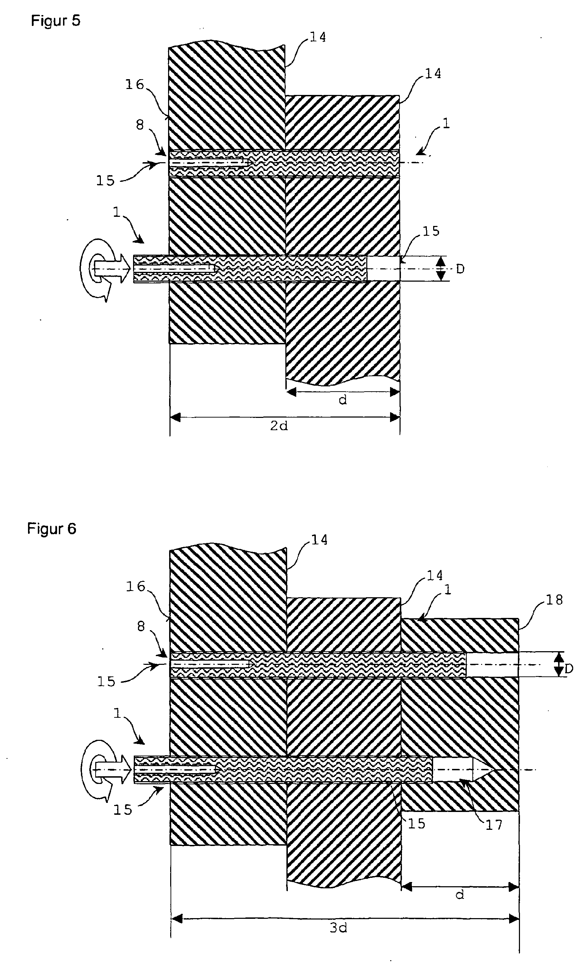

Figur 5 zeigt einen Schnitt durch eine Einbauposition zur Verbinden von zwei Fichtenbalken 14 mit einer Stärke d = 100 mm durch zwei gleichartige Verbindungselemente 1 einer Gesamtlänge von 2d = 200 mm. Der Außendurchmesser A des Verbindungselementes 1 aus getrocknetem Buchenholz mit einer Holzfeuchte u von ca. 7 % beträgt in diesem Beispiel ca. 20 mm, der Kerndurchmesser K im Bereich des Gewindes 5 und der Durchmesser D eines Lochs bzw. einer fluchtenden Bohrung 15 in den handelsüblichen Fichtenbalken 14 mit normaler Holzfeuchte u von ca. 15 % bis 18 % beträgt etwa 19 mm. Durch dieses Übermaß des Verbindungselementes 1 schneidet sich das vergleichsweise schwach ausgebildete Gewinde 5 ein Gegengewinde in der Wandung der Bohrung 15, indem Material des vergleichsweise weicheren Holzes im Zuge des Einschraubens quasi verdrängt wird.

Der Anschlagflansch 12 des Werkzeugteils 11 weist einen äußeren Durchmesser W auf, der in diesem Ausführungsbeispiel geringfügig größer als der Außendurchmesser A des Verbindungselementes 1 aus Holz ist. Damit wird erreicht, dass das Verbindungselement 1 in einer in eine Bohrung 15 eingeschraubten Endlage bündig mit einer Außenfläche 16 des äußeren Balkens 14 einer jeweiligen Holzkonstruktion abschließt, wie in Figur 5 beim oberen Verbindungselement 1 angedeutet.

Durch die übertragene Drehung presst sich das Gewinde an der Oberfläche des Verbindungselements 1 in das Wandungsholz der Bohrung und durch das mit der Einkerbung entstehende Gewinde entsteht ein Vortrieb. Wenn das Verbindungselement 1 die gewünschte Eindringtiefe erreicht hat, muss die Bohrmaschine auf den Rückwertsgang geschalten werden, um das Holzschraubengewinde 10 wieder aus dem Verbindungselement 1 heraus zu drehen.

Aufgrund der schraubenartigen Einpressung ergibt sich ein Widerhakeneffekt und das Verbindungselement 1 ist gegen ein Herausziehen gesichert. Weil das Verbindungselement 1 vor dem Einschrauben getrocknet war, erreicht er durch Aufnahme der Umgebungsfeuchtigkeit und der daraus entstehenden Quellung über die Zeit einen noch festeren Sitz.

Außerdem ist es in einem nicht weiter dargestellten Ausführungsbeispiel möglich, durch Verringerung des Durchmessers W und Verlängern des Anschlagflansches 12 das Verbindungselement beliebig tief in einer Bohrung zu versenken, was ein schräges Einschrauben ohne überstehendes Verbindungsmittel ermöglicht. So sind Diagonalverschraubungen realisierbar, die eine weitere Verbesserung der Festigkeit und Lagesicherung bewirken können.

Figur 6 zeigt einen Schnitt analog der Darstellung von Figur 5 durch einen Ausschnitt einer dreischichtigen Holzkonstruktion, die gegenüber dem Aufbau von Figur 5 um einen Abschlussbalken oder eine Sichtblende 18 erweitert worden ist. Während nun ein oberes Verbindungselement 1 in eine Durchgangsbohrung 15 eingebracht worden ist, die endseitig nachträglich durch einen Holzstopfen verschlossen werden kann, ist das untere Verbindungselement 1 noch beim maschinellen Einschrauben, wie durch die Pfeile angedeutet wird.

Die Bohrung des unteren Verbindungselements 1 ist im Gegensatz zu allen sonst gezeigten Ausnehmungen nun nur als Sackbohrung bzw. Sackloch 17 ausgeführt. D.h., dass das untere Verbindungselement 1 bei planem Abschluss seiner Stirnseite 8 mit der - maschinenseitig betrachten - Außenfläche 16 des äußeren Balkens 14 der Holzkonstruktion nur etwa zur Hälfte in den letzten Balken als Abschlussbalken eingeschraubt sein wird. Dieser Balken kann also neben konstruktiv mechanischen bzw. statischen Aufgaben auch optisch als Sichtblende dienen, da das Bohrloch in seinem Innern verdeckt bleibt. Dennoch ist eine dauerhaft zuverlässige Fixierung geschaffen worden, und zwar nur in einem Schraub-Arbeitsgang mit einem Verbindungselement 1 einer Länge von ca. 250 mm.

Da zur Verarbeitung der Verbindungselemente 1 lediglich eine ausreichend kräftige Bohrmaschine oder ein entsprechender Schrauber benötigt wird, ist ein mobiler Einsatz auch auf einer Baustelle problemlos möglich. Die vorstehend beispielhaft gewählte Material- bzw. Holzpaarung spiegelt die Dominanz von Fichtenholz auf dem mitteleuropäischen Baustoffmarkt wieder. Auch Buchenholz ist vergleichsweise häufig und damit in Stangenmaterial fast jeden Durchmessers und jeder üblichen Länge preiswert zu erhalten. Selbstverständlich ist auch Eichenholz anstelle des Buchenholzes einsetzbar. Es können auch beliebige Holzpaarungen verwendet werden, wobei ein Verbindungselement 1 aus einem Holz bestehen sollte, das mindestens so hart ist, wie das Holz, in welches das Verbindungselement 1 eingeschraubt werden soll.

Vor dem Hintergrund eines ökologischen und auch insgesamt ressourcensparenden Bauens sind in der vorliegenden Beschreibung einheimische Hölzer berücksichtigt worden, an deren Stelle auch andere Hölzer mit ähnlichen Eigenschaften in Verarbeitung und Übertragung von Drehmomenten etc. treten können. Der Verzicht auf Leim oder andere chemische und/oder natürliche Hilfsmittel ermöglicht einen ökologisch unbedenklichen Einsatz derartiger Verbindungselemente 1 auch im konstruktiven Holzbau.

### Bezugszeichenliste

- 1: Verbindungselement
- 2: zylindrischer Körper
- 3: Mantel
- 4: Schraubenlinie
- 5: Gewinde
- 6: Endbereich
- 7: Fase
- 8: Stirnseite
- 9: Bohrung
- 10: Gewindebolzen
- 11: Werkzeugteil
- 12: Anschlagflansch
- 13: Sechskantstahl
- 14: Fichtenbalken
- 15: Bohrung
- 16: Außenfläche des äußeren Balkens einer jeweiligen Holzkonstruktion
- 17: Sackloch
- 18: Abschlussbalken / Sichtblende

- ϕ: Steigungswinkel
- h: Ganghöhe des Gewindes 5
- H: Ganghöhe des Gewindebolzen 10
- A: Außendurchmesser des Verbindungselementes 1
- K: Kerndurchmesser des Verbindungselementes 1
- D: Innendruchmesser der Bohrung 15
- M: Mittelachse
- d: Stärke eines Balkens/Bretts
- t: Gewindetiefe als Differenz von A - K
- W: Durchmesser des Anschlagflanschs 12
- u: Holzfeuchte

## Patentansprüche

1. Verbindungselement zur Verbindung von Bauteilen, das einen konischen oder zylindrischen Körper (2) aus Holz aufweist,
der an seinem Mantel (3) ein Gewinde (5) trägt und
zum Einschrauben in eine Ausnehmung (15) ausgebildet ist,
**dadurch gekennzeichnet, dass**
das Verbindungselement (1) einstofflich in Halz bewerkstelligt ist und als über eine Ausnehmung (9) innenbetätigtes Verbindungselement (1) zum Einschrauben in eine Ausnehmung (15) ausgebildet ist, die frei von einem vorgefertigten Innengewinde ist.

2. Verbindungselement nach Anspruch 1,
**dadurch gekennzeichnet, dass** das Gewinde (5) eine Gewindetiefe (t) von 0.2 mm bis 10 % eines Durchmessers (A) des Körpers (2) aufweist.

3. Verbindungselement nach einem der vorstehenden Ansprüche,
**dadurch gekennzeichnet, dass** die Ganghöhe (h) einem Steigungswinkel (ϕ) von 1° bis 15° entspricht.

4. Verbindungselement nach einem der vorstehenden Ansprüche,
**dadurch gekennzeichnet, dass** das Gewinde (5) als Schraubenlinie (4) mit trapezförmiger Profilierung gebildet ist.

5. Verbindungselement nach einem der vorstehenden Ansprüche,
**dadurch gekennzeichnet, dass** das Gewinde (5) abgerundete Kehlen zwischen den Windungen aufweist.

6. Verbindungselement nach einem der vorstehenden Ansprüche,
**dadurch gekennzeichnet, dass** das Verbindungselement (1) ein spiralförmig eingepresstes oder schraubenlinienförmig gefräste, gedrehtes oder gedrechselte Gewinde (5) für einen Vortrieb in eine Ausnehmung (15) hinein durch Drehung des Verbindungselements (1) aufweist, der durch das Gewinde (5) entsteht, und deren Steigung (h) so gewählt ist, dass das Gewindeprofil breit genug ist, um beim Einschrauben nicht auszubrechen.

7. Verbindungselement nach einem der vorstehenden Ansprüche, **dadurch gekennzeichnet, dass** das Verbindungselement (1) als kopfloses Verbindungselement (1) ausgebildet ist.

8. Verbindungselement nach einem der vorstehenden Ansprüche, **dadurch gekennzeichnet, dass** es an einer oberen Stirnseite (8) eine Bohrung (9) zur Aufnahme eines Gewindebolzens (10) eines Werkzeugteils (11) besitzt.

9. Verbindungselement nach einem der vorstehenden Ansprüche, **dadurch gekennzeichnet, dass** das Verbindungselement (1) aus einem Holz besteht, , das mindestens so hart wie das Material der im Bereich der Ausnehmung (15) zu durchsetzenden Bauteile (14) ist.

10. Verbindungselement nach einem der oberen Ansprüche, **dadurch gekennzeichnet, dass** das Verbindungselement (1) beim Einsatz trockener verbaut wird als das umgebende Holz, und nachfolgend durch die Aufnahme der Umgebungsfeuchte quillt und damit einen noch festeren Sitz erhält.

11. Werkzeugteil für ein Verbindungselement nach einem der vorstehenden Ansprüchen, wobei das Verbindungselement (1) mit dem Werkzeugteil (11) zur Momentenübertragung koppelbar ausgebildet ist,
**dadurch gekennzeichnet, dass**
das Werkzeugteil (11) an einer Endseite an eine Aufnahme einer Bohrmaschine oder eines Schraubers angepasst ausgebildet ist und
zur Übertragung eines hohen Drehmoments auf das einen konischen oder zylindrischen Körper (2) aus Holz aufweisenden und an seinem Mantel (3) ein Gewinde (5) tragenden Verbindungselement (1) an einem gegenüberliegenden Endbereich jenseits eines Anschlagflansches (12) ein Holzschraubengewinde (10) zur Aufnahme eines Verbindungselements (1) durch Einschrauben in eine zentrale Ausnehmung (9) des Verbindungselements (1) ausgebildet ist.

12. Werkzeugteil nach dem vorstehenden Anspruch, **dadurch gekennzeichnet, dass** der Anschlagflansch (12) den selben oder einen geringfügig kleineren Durchmesser (W) als das Verbindungselement (1) aufweist und somit auch durch die Bohrung (15) im Bauteil passt, um ein Versenken des Verbindungsmittels in der Bauteiloberfläche bzw. Außenfläche (16) zu ermöglichen.

13. Werkzeugelement nach Anspruch 11, **dadurch gekennzeichnet, dass** der Anschlagflansch (12) zur Begrenzung der Eindringtiefe des Verbindungselements (1) in ein Bauteil einen größeren Durchmesser (W) als die Bohrung (15) des Bauteils (14) aufweist.

## Claims

1. Connecting member for connecting components,
comprising a conical or cylindrical body (2) of wood,
which carries a thread (5) on its outer surface (3), and
is configured to be screwed into a recess (15),
**characterised in that**
the connecting member (1) is made of a single material, namely wood, and is configured as a connecting member (1) actuated from the inside via a recess (9), for screwing into a recess (15) which is free of a prefabricated internal thread.

2. Connecting member according to claim 1,
**characterised in that** the thread (5) has a thread depth (t) of 0.2 mm to 10% of a diameter (A) of the body (2).

3. Connecting member according to any one of the preceding claims, **characterised in that** the pitch (h) corresponds to a lead angle (ϕ) of 1° to 15°.

4. Connecting member according to any one of the preceding claims, **characterised in that** the thread (5) is formed as a helix (4) with trapezoidal profiling.

5. Connecting member according to any one of the preceding claims, **characterised in that** the thread (5) comprises rounded grooves between the turns.

6. Connecting member according to any one of the preceding claims, **characterised in that** the connecting member (1) comprises a thread (5) which is pressed in in a spiral shape or which is milled, lathed or turned in a helical shape, for a driving action into a recess (15) due to a rotation of the connecting element (1), which driving action is generated by the thread (5), and the lead (h) of which is selected such that the thread profile is wide enough not to break out when it is being screwed in.

7. Connecting member according to any one of the preceding claims, **characterised in that** the connecting member (1) is configured as a headless connecting member (1).

8. Connecting member according to any one of the preceding claims, **characterised in that** has, on one upper front face (8), a bore hole (9) for receiving a threaded bolt (10) of a tool part (11).

9. Connecting member according to any one of the preceding claims, **characterised in that** the connecting member (1) consists of a wood which is at least as hard as the material of the components (14) to be penetrated in the area of the recess (15).

10. Connecting member according to any one of the claims above, **characterised in that**, during use, the connecting member (1) is installed dryer that the surrounding wood and subsequently swells by absorbing the surrounding moisture, thus obtaining an even firmer fit.

11. Tool part for a connecting member according to any one of the preceding claims, wherein the connecting member (1) is configured so that it can be coupled with the tool part (11) for torque transmission,
**characterised in that**
the tool part (11), at one end, is configured to match an accommodating portion of a drill or a screw driver, and
a wood-screw thread (10) for receiving a connecting member (1) by screwing it into a central recess (9) of the connecting member (1) is formed at an opposite end portion beyond a stop flange (12), for transferring a high torque onto the connecting member (1) comprising a conical or cylindrical body (2) of wood and carrying a thread (5) on its outer surface (3).

12. Tool part according to the preceding claim, **characterised in that** the stop flange (12) has the same or a slightly smaller diameter (W) than the connecting member (1), thus also fitting through the bore hole (15) in the component, in order to permit countersinking the connecting member into the component surface or external surface (16).

13. Tool member according to claim 11, **characterised in that** the stop flange (12) has a diameter (W) larger than the bore hole (15) of the component (14) in order to limit the penetration depth of the connecting member (1) into a component.

## Revendications

1. Élément de liaison pour la liaison de composants, qui comprend un corps conique ou cylindrique (2) en bois,
qui porte un pas de vis (5) sur son enveloppe (3) et qui est réalisé pour le vissage dans un évidement (15),
**caractérisé en ce que**
l'élément de liaison (1) est réalisé en bois d'un seul tenant sous la forme d'un élément de liaison (1) actionné de l'intérieur via un creux (9) pour son vissage dans un évidement (15) qui est exempt de taraudage intérieur préalablement réalisé.

2. Élément de liaison selon la revendication 1,
**caractérisé en ce que** le pas de vis (5) présente une profondeur (t) qui va de 0,2 mm à 10 % d'un diamètre (A) du corps (2).

3. Élément de liaison selon l'une des revendications précédentes,
**caractérisé en ce que** la hauteur du pas (h) correspond à un angle de montée (ϕ) de 1° à 15°.

4. Élément de liaison selon l'une des revendications précédentes,
**caractérisé en ce que** le pas de vis (5) est formé comme une ligne hélicoïdale (4) avec un profil de forme trapézoïdale.

5. Élément de liaison selon l'une des revendications précédentes,
**caractérisé en ce que** le pas de vis (5) présente des gorges arrondies entre les spires.

6. Élément de liaison selon l'une des revendications précédentes,
**caractérisé en ce que** l'élément de liaison (1) comporte un pas de vis (5) pressé sous forme de spirale ou fraisé ou tourné sous forme d'une ligne hélicoïdale, en vue de son enfoncement dans un évidement (15) par rotation de l'élément de liaison (1), cet enfoncement se produisant du fait du pas de vis (5), et dont la pente (h) est ainsi choisie que le profil du pas de vis est suffisamment large pour ne pas se briser lors du vissage.

7. Élément de liaison selon l'une des revendications précédentes, **caractérisé en ce que** l'élément de liaison (1) est réalisé sous forme d'élément de liaison sans tête (1).

8. Élément de liaison selon l'une des revendications précédentes, **caractérisé en ce qu'**il possède sur une face frontale supérieure (8) un perçage (9) pour la réception d'un goujon fileté (10) d'une partie d'outil (11).

9. Élément de liaison selon l'une des revendications précédentes, **caractérisé en ce que** l'élément de liaison (1) est réalisé en un bois qui est au moins aussi dur que le matériau des composants (14) qu'il s'agit de traverser dans la zone de l'évidement (15).

10. Élément de liaison selon l'une des revendications précédentes, **caractérisé en ce que** l'élément de liaison (1) est intégré lors de la mise en oeuvre dans un état plus sec que le bois environnant, afin de gonfler par la suite par absorption de l'humidité ambiante, et ainsi d'acquérir une assise encore plus ferme.

11. Partie d'outil pour un élément de liaison selon l'une des revendications précédentes, dans laquelle l'élément de liaison (1) est réalisé de manière à pouvoir être couplé à la partie d'outil (11) pour la transmission d'un couple,
**caractérisée en ce que**
la partie d'outil (11) est réalisée au niveau d'un côté terminal de façon adaptée à un logement d'une machine de perçage ou de vissage, et en vue de transmettre un couple de rotation élevé sur l'élément de liaison (1) qui présente un corps conique ou cylindrique (2) en bois et qui porte un pas de vis (5) sur son enveloppe (3), un pas de vis en bois (10) est réalisé au niveau d'une zone terminale opposée au-delà d'une bride de butée (12) pour la réception d'un élément de liaison (1) par vissage dans un creux central (9) de l'élément de liaison (1).

12. Partie d'outil selon la revendication précédente, **caractérisée en ce que** la bride de butée (12) présente le même diamètre (W), ou un diamètre légèrement plus petit, que l'élément de liaison (1), et s'ajuste ainsi également à travers le perçage (15) dans le composant, pour permettre un enfoncement de l'élément de liaison dans la surface ou la face extérieure du composant (16).

13. Partie d'outil selon la revendication 11, **caractérisé en ce que** la bride de butée (12) présente, pour limiter la profondeur de pénétration de l'élément de liaison (1) dans un composant, un diamètre (W) plus élevé que le perçage (15) du composant (14).
